# EUROPÄISCHE PATENTSCHRIFT

(11) **EP 2 862 690 B1**
(45) Veröffentlichungstag und Bekanntmachung des Hinweises auf die Patenterteilung: **26.07.2017**
(21) Anmeldenummer: 14003365.5
(22) Anmeldetag: 29.09.2014
(51) Int. Cl.: B29C 45/14

(54) **Ein Emblem oder eine Verzierung aufweisendes Bauteil insbesondere Radom**
A component with an emblem, in particular a radome
Composant présentant un emblème ou une décoration, notamment radôme

(30) Priorität: 19.10.2013 DE 102013017437
(43) Veröffentlichungstag der Anmeldung: 22.04.2015
(73) Patentinhaber: Linden GmbH, 58515 Lüdenscheid (DE)
(72) Erfinder: Nolte, Christian, 58540 Meinerzhagen (DE); Schwab, Thomas, 33647 Bielefeld (DE)
(74) Vertreter: Cohausz Hannig Borkowski Wißgott

(56) Entgegenhaltungen:
- DE-A1-102005 015 323
- DE-A1-102008 027 725
- DE-A1-102010 030 911
- DE-A1-102011 053 104
- US-A1- 2012 048 458

## Beschreibung

Die Erfindung betrifft ein Emblem oder eine Verzierung aufweisendes Bauteil wie einem Radom an einem Kraftfahrzeug mit einer äußeren flachen oder konvex gewölbten Vorderschale aus transparentem Kunststoff, auf deren flachen oder konkav gewölbten Rückseite als Dekorschicht(en) mindestens eine Lackschicht insbesondere eine silberglänzende Lackschicht aufgebracht ist/sind, und mit einer sich an die Rückseite sich anschmiegenden, die Rückseite abdeckenden Abdeckschale aus Kunststoff, wobei die Vorderschale rückseitig einen umlaufenden insbesondere kreisförmigen Außenrand besitzt, an dem die Abdeckschale mit einem vorderseitigen, entsprechend geformten Außenrand befestigt anliegt.

Bei mehrschichtigen Bauteilen entsprechend der US 2012/0048458 A1, die ein Emblem gemäß dem Oberbegriff des Anspruchs 1 offenbart, und bei Radoms entsprechend der DE 10 2011 053 104 A1 ist es bekannt, die Außenränder von Vorderschale und Abdeckschale aneinander zu kleben. Hierbei hat es sich gezeigt, dass diese Klebverbindung nicht immer ausreichend feuchtigkeitsdicht ist, so dass über den Rand Feuchtigkeit zu der Dekorschicht bzw. den Dekorschichten gelangt und zu unschönen Einschlüssen und Verfärbungen führt.

Aufgabe der Erfindung ist es, ein Bauteil insbesondere Radom der eingangs genannten Art und insbesondere ein Verfahren zum Herstellen eines Bauteils/Radoms zu schaffen, das in der Herstellung technisch einfach durchzuführen ist und eine absolut sichere Dichtigkeit am Rand erzielt, so dass keine Feuchtigkeit zwischen Vorder- und Abdeckschale zu der Dekorschicht gelangen kann.

Diese Aufgabe wird erfindungsgemäß durch die Merkmale des Anspruchs 1 gelöst. Durch die stoffschlüssige Verbindung von Vorderschale und Abdeckschale rundum am Rand ist sichergestellt, dass eine absolute Dichtigkeit erreicht wird. Hierbei sind der technische Aufbau und die Herstellung besonders einfach. Hierzu wird vorgeschlagen, dass die stoffschlüssige Verbindung ein Anschmelzen des Außenrandes der Vorderschale aufweist.

Vorzugsweise wird vorgeschlagen, dass die Vorderschale und die Abdeckschale aus Polycarbonat bestehen.

Ein besonders einfaches und sicheres Verfahren zum Herstellen eines Bauteils/Radoms wird durch die Merkmale des Anspruchs 4 erreicht. Alternativ wird ein Verfahren zum Herstellen eines Bauteils/Radoms vorgeschlagen mit den Merkmalen des Anspruchs 5. Eine einfache und sichere Verbindung wird erreicht, wenn die stoffschlüssige Verbindung dadurch erfolgt, dass der heiße Kunststoff der Abdeckschale den Kunststoff des Außenrandes der Vorderschale anschmilzt.

Eine weitere Verbesserung wird erreicht, wenn vor dem Aufbringen des Kunststoffes auf die Rückseite der Vorderschale die Rückseite der Vorderschale mit einem Primer bedeckt wird.

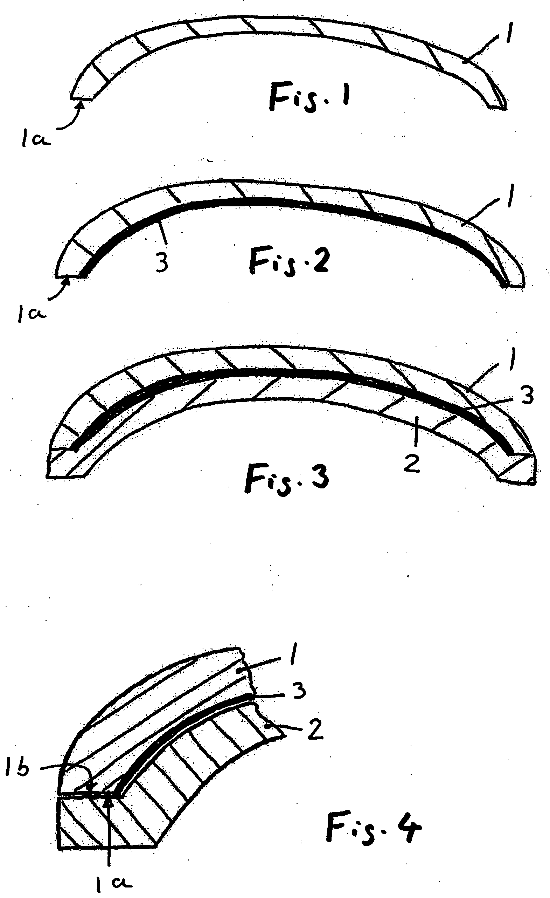

Vorteilhafte Ausführungsbeispiele der Erfindung werden im Folgenden näher beschrieben. Es zeigen
- Fig. 1: einen Schnitt durch die Vorderschale,
- Fig. 2: einen Schnitt durch die Vorderschale mit angebrachten Dekorschichten,
- Fig. 3: einen Schnitt durch die Vorderschale mit Dekorschichten und dahinter gespritzter Abdeckschale und
- Fig. 4: eine vergrößerte Darstellung des Randes des Radoms nach Fig. 3.

Ein Bauteil insbesondere Radom bildet ein gewölbtes insbesondere radardurchlässiges Emblem oder eine insbesondere radardurchlässige Verzierung mit einer äußeren, transparenten, gewölbten Halbschale als Vorderschale 1, auf deren Rückseite mehrere Lackschichten 3 als Dekorschicht(en) insbesondere auch mit silberglänzendem Lack aufgebracht sind. Über diese Lackschichten 3 ist rückseitig noch ein Schutzlack und ein Primer aufgebracht.

Danach wird die insbesondere aus Polycarbonat bestehende Vorderschale 1 durch Aufspritzen von Polycarbonat rückseitig mit einer Abdeckschale 2 versehen, deren Oberseite in Form und Größe der Unterseite der äußeren Vorderschale 1 entspricht, so dass ein formschlüssiger Verbund entsteht, bei dem der Primer auf der Rückseite der Vorderschale 1 für einen ausreichenden Halt sorgt.

In einem ersten Herstellungsverfahren werden die Lacke 3 der Dekorschicht auch auf den rückseitigen Rand 1a der Vorderschale 1 gespritzt, so dass am äußeren Rand 1a der oberen Vorderschale 1 sich zu Beginn auch Lackschichten 3 befinden. Diese werden aber abgeschliffen, so dass dann am äußeren Rand 1a das Polycarbonat der Vorderschale freiliegt. An dieser Stelle wird nicht geklebt, sondern die rückseitige Abdeckschale 2 wird auf die vordere Schale 1 aufgespritzt, d.h. die vordere Schale ist hinterspritzt durch die rückseitige Schale, so dass am Rand das gespritzte Polycarbonat sich mit dem Polycarbonat des Randes 1a der vorderen Schale 1 verbindet. Das rückseitige Polycarbonat wird somit heiß aufgespritzt, dabei schmilzt der heiße Rand des rückseitigen Polycarbonatmaterials das Polycarbonat des Randes 1a der Vorderschale 1 an. Damit liegen zwei Polycarbonatflächen am Rand aufeinander und werden aneinander angeschmolzen, so dass eine stoffschlüssige Verbindung (Verbundspritzgießen) entsteht mit einer absolut sicheren Dichtigkeit.

In einem alternativen Herstellungsverfahren wird vor dem Aufspritzen der Lackschichten 3 auf die Rückseite der Vorderschale 1 der Außenrand 1a Abdeckelemente insbesondere in Form mindestens einer Schablone aufgebracht, die den Rand 1a vollständig überdecken und dafür sorgen, dass der Rand 1a frei von Lack bleibt. Nach dem Trocknen der Lacke werden das oder die Abdeckelemente entfernt und das Polycarbonat der Abdeckschale 2 auf der Rückseite der Vorderschale aufgebracht insbesondere aufgespritzt, so dass die Außenränder 1a, 1b beider Schalen 1, 2 miteinander sich stoffschlüssig verbinden.

## Patentansprüche

1. Ein Emblem oder eine Verzierung aufweisendes Bauteil wie einem Radom an einem Kraftfahrzeug mit einer äußeren flachen oder konvex gewölbten Vorderschale (1) aus transparentem Kunststoff, auf deren flachen oder konkav gewölbten Rückseite als Dekorschicht(en) mindestens eine Lackschicht aufgebracht ist/sind, und mit einer sich an die Rückseite sich anschmiegenden, die Rückseite abdeckenden Abdeckschale (2) aus Kunststoff, wobei die Vorderschale (1) rückseitig einen umlaufenden Außenrand (1a) besitzt, an dem die Abdeckschale mit einem vorderseitigen, entsprechend geformten Außenrand (1b) befestigt anliegt, **dadurch gekennzeichnet, dass** der Außenrand (1b) der Abdeckschale (2) mit dem Außenrand (1a) der Vorderschale (1), durch Verbundspritzgießen, stoffschlüssig verbunden ist.

2. Bauteil nach Anspruch 1, **dadurch gekennzeichnet, dass** die stoffschlüssige Verbindung ein Anschmelzen des Außenrandes (1a) der Vorderschale (1) aufweist.

3. Bauteil nach Anspruch 1 oder 2, **dadurch gekennzeichnet, dass** die Vorderschale (1) und die Abdeckschale (2) aus Polycarbonat bestehen.

4. Verfahren zum Herstellen eines Bauteils nach einem der Ansprüche 1 bis 3,
**dadurch gekennzeichnet,**
- **dass** zuerst die Rückseite der Vorderschale (1) mit der/den Lackschicht(en) (3) derart versehen wird, dass auch deren Außenrand (1 a) mit der/den Lackschicht(en) versehen ist,
- **dass** nach dem Trocknen der Lackschicht(en) (3) die Lackschicht(en) des Außenrandes (1a) der Vorderschale (1) so weit entfernt wird/werden, dass am Außenrand der Kunststoff freiliegt, und
- **dass** dann der Kunststoff der Abdeckschale (2) auf die Rückseite der Vorderschale (1) heiß aufgebracht wird, so dass die Außenränder (1a, 1b) beider Schalen (1, 2) miteinander stoffschlüssig verbunden sind.

5. Verfahren zum Herstellen eines Bauteils nach einem der Ansprüche 1 bis 3, **dadurch gekennzeichnet,**
- **dass** zuerst der rückseitige Außenrand (1a) der Vorderschale (1) durch ein entfernbares Abdeckelement abgedeckt wird, um den Außenrand im Wesentlichen lackfrei zu halten,
- **dass** dann die Rückseite der Vorderschale (1) mit der/den Lackschicht(en) (3) versehen wird,
- **dass** nach dem Trocknen der Lackschicht(en) (3) das Abdeckelement entfernt wird, so dass dann der Kunststoff des rückseitigen Außenrandes (1a) der Vorderschale (1) freiliegt, und
- **dass** dann der Kunststoff der Abdeckschale (2) auf die Rückseite der Vorderschale (1) heiß aufgebracht wird, so dass die Außenränder (1a, 1b) beider Schalen (1, 2) miteinander stoffschlüssig verbunden sind.

6. Verfahren nach Anspruch 4 oder 5, **dadurch gekennzeichnet, dass** die stoffschlüssige Verbindung dadurch erfolgt, dass der heiße Kunststoff der Abdeckschale (2) den Kunststoff des Außenrandes (1 a) der Vorderschale anschmilzt.

7. Verfahren nach Anspruch 3 oder 4, **dadurch gekennzeichnet, dass** vor dem Aufbringen des Kunststoffes auf die Rückseite der Vorderschale (1) die Rückseite der Vorderschale mit einem Primer bedeckt wird.

## Claims

1. Component having an emblem or a decoration, such as a radome on a motor vehicle, with an outer, flat or convexly curved front shell (1) made of transparent plastic, on the flat or concavely curved rear side of which at least one varnish layer is applied as decorative layer(s), and with a covering shell (2) which nestles against the rear side, covers the rear side and is made of plastic, wherein the rear side of the front shell (1) has an encircling outer edge (1a) against which the covering shell lies in a manner fastened with a front-side, correspondingly shaped outer edge (1b), **characterized in that** the outer edge (1b) of the covering shell (2) is connected in an integrally bonded manner to the outer edge (1a) of the front shell (1) by composite injection moulding.

2. Component according to Claim 1, **characterized in that** the integrally bonded connection has a fusing of the outer edge (1a) of the front shell (1).

3. Component according to Claim 1 or 2, **characterized in that** the front shell (1) and the covering shell (2) are composed of polycarbonate.

4. Method for producing a component according to one of Claims 1 to 3, **characterized**
- **in that** first of all the rear side of the front shell (1) is provided with the varnish layer(s) (3) in such a manner that its outer edge (1a) is also provided with the varnish layer(s),
- **in that**, after drying of the varnish layer(s) (3), the varnish layer(s) of the outer edge (1a) of the front shell (1) is/are removed to such an extent that the plastic is exposed on the outer edge, and
- **in that** the plastic of the covering shell (2) is then applied hot to the rear side of the front shell (1) such that the outer edges (1a, 1b) of the two shells (1, 2) are connected to each other in an integrally bonded manner.

5. Method for producing a component according to one of Claims 1 to 3, **characterized**
- **in that** first of all the rear-side outer edge (1a) of the front shell (1) is covered by a removable covering element in order to keep the outer edge substantially free from varnish,
- **in that** the rear side of the front shell (1) is then provided with the varnish layer(s) (3),
- **in that**, after drying of the varnish layer(s) (3), the covering element is removed such that the plastic of the rear-side outer edge (1a) of the front shell (1) is then exposed, and
- **in that** the plastic of the covering shell (2) is then applied hot to the rear side of the front shell (1) such that the outer edges (1a, 1b) of the two shells (1, 2) are connected to each other in an integrally bonded manner.

6. Method according to Claim 4 or 5, **characterized in that** the integrally bonded connection is made by the hot plastic of the covering shell (2) fusing the plastic of the outer edge (1a) of the front shell.

7. Method according to Claim 3 or 4, **characterized in that**, before the plastic is applied to the rear side of the front shell (1), the rear side of the front shell is covered with a primer.

## Revendications

1. Élément structurel présentant un emblème ou une décoration, tel qu'un radôme, au niveau d'un véhicule à moteur avec une coque frontale (1) extérieure, plate ou courbée de manière convexe, laquelle est constituée d'une matière plastique transparente, sur la face arrière, plate ou courbée de manière concave, de laquelle au moins une couche de peinture laquée est ou sont appliquée(s) sous la forme d'une ou de couches de décoration, et avec une coque de recouvrement (2) en matière plastique qui recouvre la face arrière et qui épouse la forme de la face arrière, dans lequel la coque frontale (1) possède sur sa face arrière une bordure extérieure (1a) sur tout le pourtour, au niveau de laquelle la coque de recouvrement vient s'appuyer en étant fixée avec une bordure extérieure (1b) qui se trouve sur la face avant et qui est moulée de manière correspondante, **caractérisé en ce que** la bordure extérieure (1b) de la coque de recouvrement (2) est reliée par assemblage de matières à la bordure extérieure (1a) de la coque frontale (1), par l'intermédiaire d'un procédé de moulage de composite par injection.

2. Élément structurel selon la revendication 1, **caractérisé en ce que** la jonction par assemblage de matières présente une fusion de la bordure extérieure (1a) de la coque frontale (1).

3. Élément structurel selon la revendication 1 ou 2, **caractérisé en ce que** la coque frontale (1) et la coque de recouvrement (2) sont constituées de polycarbonate.

4. Procédé destiné à la fabrication d'un élément structurel selon l'une des revendications 1 à 3, **caractérisé en ce que**:
- dans un premier temps, la face arrière de la coque frontale (1) est pourvue de la ou des couche(s) de peinture laquée (3), de telle sorte que sa bordure extérieure (1a) est également pourvue de la ou des couche(s) de peinture laquée ;
- après le séchage de la ou des couche (s) de peinture laquée (3), la ou les couche(s) de peinture laquée de la bordure extérieure (1a) de la coque frontale (1) est ou sont supprimée(s), de telle sorte que la matière plastique se retrouve à l'état apparent au niveau de la bordure extérieure ; et
- la matière plastique de la coque de recouvrement (2) est ensuite appliquée à chaud sur la face arrière de la coque frontale (1), de telle sorte que les bordures extérieures (1a, 1b) des deux coques (1, 2) sont reliées l'une à l'autre par assemblage de matières.

5. Procédé destiné à la fabrication d'un élément structurel selon l'une des revendications 1 à 3, **caractérisé en ce que**:
- dans un premier temps, la bordure extérieure (1a), laquelle est située sur la face arrière, de la coque frontale (1) est recouverte par un élément de recouvrement amovible en vue de préserver, pour l'essentiel, la bordure extérieure de toute peinture laquée ;
- la face arrière de la coque frontale (1) est ensuite pourvue de la ou des couches de peinture laquée (3) ;
- l'élément de recouvrement est supprimé après le séchage de la ou des couches de peinture laquée (3), de telle sorte que la matière plastique de la bordure extérieure (1a), laquelle se trouve sur la face arrière, de la coque frontale (1) se retrouve alors à l'état apparent ; et
- la matière plastique de la coque de recouvrement (2) est ensuite appliquée à chaud sur la face arrière de la coque frontale (1), de telle sorte que les bordures extérieures (1a, 1b) des deux coques (1, 2) sont reliées l'une à l'autre par assemblage de matières.

6. Procédé selon la revendication 4 ou 5, **caractérisé en ce que** la jonction par assemblage de matières est réalisée de telle manière que la matière plastique brûlante de la coque de recouvrement (2) fait fondre la matière plastique de la bordure extérieure (1a) de la coque frontale.

7. Procédé selon la revendication 3 ou 4, **caractérisé en ce que** la face arrière de la coque frontale est enduite d'une couche de primaire d'apprêt avant l'application de la matière plastique sur la face arrière de la coque frontale (1).
